# EUROPÄISCHE PATENTSCHRIFT

(11) **EP 0 712 890 B1**
(45) Veröffentlichungstag und Bekanntmachung des Hinweises auf die Patenterteilung: **15.09.1999**
(21) Anmeldenummer: 95116729.5
(22) Anmeldetag: 24.10.1995
(51) Int. Cl.: C08L 23/02

(54) **Verfahren zur Verminderung des Schälens bei der Extrusion einer Polyolefin-Formmasse.**
Process for reducing of peeling by extruding a polyolefin composition.
Procédé pour réduire le pelage pendant l' extrusion d'un composé de polyoléfine.

(30) Priorität: 03.11.1994 DE 4439248
(43) Veröffentlichungstag der Anmeldung: 22.05.1996
(73) Patentinhaber: Elenac GmbH, 77694 Kehl (DE)
(72) Erfinder: Breuers, Werner, Dr., D-65817 Eppstein (DE); Berthold, Joachim, Dr., D-65779 Kelkheim (DE)

(56) Entgegenhaltungen:
- EP-A- 0 265 839
- EP-A- 0 282 882
- EP-A- 0 292 264
- US-A- 3 367 999
- US-A- 4 436 863

## Beschreibung

Die Erfindung betrifft ein neuartiges Verfahren zur Verminderung des Schälens bei der Extrusion einer Polyolefin-Formmasse.

Olefin-Polymere werden nach der Herstellung in Form von Granulat oder Gries in Extrusions- oder Spritzgieß-Verfahren zu einem Fertigteil (Produkt) verarbeitet. Dieses Fertigteil kann eine Folie, ein Rohr oder ein Groß- oder Kleinhohlkörper sein. Speziell bei der Verarbeitung von höhermolekularen Polyolefinen zu Großhohlkörpern (Fässer, Tanks), tritt das Problem des "Schälens" auf.

Unter "Schälen" versteht man die Erscheinung, daß sich beim Ausstoß der Polymerschmelze an der Innen- oder Außenseite des plastischen Schlauches und späteren Großhohlkörpers Fäden aus dem gleichen Material bilden. Diese Fäden stören die bestimmungsgemäße Verwendung des Gebindes, da sie sich beispielsweise von einer Faßinnenoberfläche lösen können und das darin enthaltene Produkt verunreinigen.

Zur Beseitigung des Schälens ist es üblich, die Molmassenverteilung des Polymeren zu ändern oder die Verarbeitungsmaschinen beispielsweise durch Änderung der Düsengeometrie an ein gegebenes Produkt anzupassen.

Eine Änderung der Molmassenverteilung ist im allgemeinen unerwünscht, da sie zu einer Änderung der Produkteigenschaften führt. Eine Modifizierung der Verarbeitungsmaschinen ist meist ebenfalls nicht möglich, da Produkte verschiedener Hersteller verwendet werden und die Maschinen nicht für ein bestimmtes Produkt optimiert werden können.

Aufgabe der vorliegenden Erfindung war es, das Auftreten des "Schäleffektes" bei der Verarbeitung von Polyolefinen zu verhindern, ohne daß an der Molmassenverteilung des Polymeren oder an den Verarbeitungsmaschinen eine Änderung vorgenommen werden muß.

Diese Aufgabe wurde durch den Zusatz eines oxidierten Wachses bei der Granulierung des Polyolefinpulvers gelöst.

Mischungen enthaltend oxidierte Wachse sind bereits aus der Literatur bekannt. Die EP-A-0 292 264 beschreibt Mischungen enthaltend oxidiertes Polyolefinwachs, die eine gute Fließfähigkeit und hohe Schlagzähigkeit besitzen. Die US-A-4,436,863 beschreibt den Zusatz von oxidiertem High-Density-Polyethylen zur Verbesserung der Fließeigenschaften und des Oberflächenglanzes. Die EP-A-0 265 839 beschreibt die Zugabe von niedrigmolekularem oxidiertem Polypropylen (Wachs) zur Verbesserung der Schmelzbarkeit, der mechanischen Festigkeit und der elektrischen Leitfähigkeit. Die US-A-3,367,999 schließlich beschreibt den Zusatz von oxidiertem niedermolekularem Polyethylen zur verbesserten Bedruckbarkeit.

Keine der bislang bekannten Literaturstellen konnte dem Fachmann eine Anregung zur Lösung seiner Aufgabe geben.

Die Erfindung betrifft somit ein Verfahren der eingangs genannten Gattung, dessen Kennzeichenmerkmal darin zu sehen ist, dass man der Formmasse bestehend aus einem Olefinpolymeren 0,001 bis 5 phr eines oxidierten Wachses zusetzt.

Nach dem erfindungsgemäßen Verfahren enthält die Polyolefin-Formmasse ein Olefinpolymer, beispielsweise eines der folgenden:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-lsopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

Bevorzugt sind Polyethylen, Polypropylen, Polybuten-1, Polyhexen-1, Poly-4-methylenpenten-1, Polyocten-1 oder deren Copolymere.

Neben dem Olefinpolymer enthält die Formmasse Wachse. Diese Wachse sind oxidierte voll- oder halbsynthetische Wachse oder Polyolefinwachse. Bevorzugt sind als Wachse oxidierte halbsynthetische Wachse auf Basis Rohmontanwachs und Polyolefinwachse.

Das bevorzugte oxidierte halbsynthetische Wachs auf Basis Rohmontanwachs hat folgende Kenndaten:

| | |
|---|---|
| Tropfpunkt | 79 bis 90°C |
| Säurezahl | 115 bis 155 mg KOH/g |
| Verseifungszahl | 140 bis 175 mg KOH/g |
| Dichte | 0,97 bis 1,03 g/cm³ |

Das bevorzugte oxidierte Wachs auf Basis von Polyolefinwachs hat folgende Kenndaten:

| | |
|---|---|
| Tropfpunkt | 95 bis 130°C |
| Säurezahl | 15 bis 70 mg KOH/g |
| Verseifungszahl | 25 bis 115 mg KOH/g |
| Dichte | 0,90 bis 1,03 g/cm³ |

Das bevorzugte oxidierte halbsynthetische Wachs auf Basis Rohmontanwachs entsteht durch oxidative Bleichung von Rohmontanwachs. Wachse dieses Typs sind seit vielen Jahren im Handel erhältlich.

Das bevorzugte oxidierte Wachs auf Basis von Polyolefinwachs entsteht durch Massepolymerisation im Niederdruckverfahren nach Ziegler. Das erhaltene Polyolefinwachs wird durch Behandeln der Schmelze mit Luft zu Oxidaten umgesetzt. Auch diese Wachse sind seit vielen Jahren im Handel erhältlich.

Das oxidierte Wachs wird in einer Konzentration von 0,001 bis 5 phr (parts per hundred parts of resin), vorzugsweise 0,01 bis 0,5 phr, dem Polymeren zugesetzt. Zusätzlich kann die Formmasse noch weitere Additive enthalten, wie beispielsweise Antioxidantien, beispielsweise alkylierte Monophenole, alkylierte Hydrochinone, hydroxylierte Thiodiphenylether, Alkyliden-Bisphenole, Benzylverbindungen, Acylaminophenole, Ester der β-(5-t-Butyl-4-hydroxy-3-methylphenyl)-propionsäure, Amide der β-13,5-Di-t-butyl-4-hydroxyphenyl)-propionsäure, UV-Absorber und Lichtschutzmittel, beispielsweise 2-(2'Hydroxy2-(2'Hydroxy-phenyl)benztriazole, 2-Hydroxybenzophenone, Oxalsäurediamide, Ester von gegebenenfalls substituierten Benzoesäuren, Acrylate, Nickelverbindungen, sterisch gehinderte Amine (HALS), Metalldesaktivatoren, Phosphate und Phosphite, peroxidzerstörende Verbindungen, basische Costabilisatoren, Nukleierungsmittel, Füllstoffe und Verstärkungsstoffe, Weichmacher, optische Aufheller, Flammschutzmittel, Antistatika, Treibmittel, Gleitmittel und Pigmente.

Die Einarbeitung der erfindungsgemäß zu verwendenden oxidierten Wachse und gegebenenfalls der anderen Additive erfolgt nach den für die Compoundierung von Polyolefinen üblichen Methoden. Vorzugsweise erfolgt der Zusatz bei der Granulierung.

Nach dem erfindungsgemäßen Verfahren erhält man Fertigteile, die keinen Schäleffekt mehr zeigen.

Die nachfolgenden Beispiele sollen die Erfindung erläutern. Die Charakterisierung des "Schäleffektes" erfolgt in der folgenden Weise. Auf einer Extrusionsblasmaschine werden aus einer erfindungsgemäßen Polyolefin-Formmasse Fässer mit einem Fassungsvolumen von 200 l mit unterschiedlichen Durchsätzen hergestellt. Anschließend erfolgt die optische Begutachtung der Fässer mit einer Einstufung in eine "Schälnote" zwischen 1 und 5. Die Note 1 bedeutet, daß an der Faßoberfläche keinerlei Fäden zu beobachten sind. Die Faßoberfläche ist glatt und unversehrt. Je nach Häufigkeit des Auftretens von Polymerfäden an der Faßoberfläche und deren Dicke erfolgt eine Einstufung in die Noten 2 - 5.

### Beispiel 1

Ein Polyethylen mit einem MFR 190/21,6 von 2,0 g/10 min und einer Dichte von 0,950 g/cm³ wurde in einem Mischbehälter mit 0,12 phr Pentaerythrittetrakis[3-(3-,5-di-t-butyl-4-hydroxyphenyl)-propionat] und 0,2 phr eines oxidierten Polyethylenwachses (Dichte 0,97 - 0,99 g/cm³, SZ 15 - 17 mg KOH/g, VZ 20 -35 mg KOH/g) gemischt und mittels eines Extruders bei 290°C granuliert. 400 kg dieses Granulates wurden auf einer Extrusionsblasanlage zu 200 l Fässern verarbeitet. Die so erhaltenen Fässer wiesen eine glatte Innen- und Außenoberfläche auf. Die "Schälnote" betrug 1.

### Beispiel 2

Ein Polyethylen mit einem MFR 190/21,6 von 2,0 g/10 min und einer Dichte von 0,950 g/cm³ wurde in einem Mischbehälter mit 0,12 phr Pentaerythrittetrakis[3-(3-,5-di-t-butyl-4-hydroxyphenyl)-propionat] und 0,2 phr eines oxidierten Polyethylenwachses (Dichte 0,97 - 0,99 g/cm³, SZ 15 - 17 mg KOH/g, VZ 20 - 35 mg KOH/g) gemischt und zusammen mit 0,8 phr eines Blaubatches (Masterbatch mit Blaupigment) mittels eines Extruders bei 290°C granuliert. 400 kg dieses blauen Granulates wurden auf einer Extrusionsblasanlage zu 200 l Fässern extrudiert. Die so erhaltenen blauen Fässer wiesen eine glatte Innen- und Außenoberfläche auf. Die "Schälnote" betrug 1.

### Vergleichsbeispiel A

Das gleiche Polyethylen wie in den Beispielen 1 und 2 wurde in einem Mischbehälter mit 0,12 phr Pentaerythrit-tetrakis[3-(3-,5-di-t-butyl-4-hydroxyphenyl)propionat] stabilisiert und mittels eines Extruders bei 290°C granuliert. 400 kg dieses Granulates wurden auf einer Extrusionsblasanlage zu 200 l Fässern extrudiert. Die so erhaltenen Fässer wiesen an der Innen- oder Außenoberfläche einen "Schäleffekt" der Note 3, 4 oder 5 auf.

### Vergleichsbeispiel B

Das gleiche Polyethylen wie in den Beispielen 1 und 2 wurde in einem Mischbehälter mit 0,12 phr Pentaerythrit-tetrakis[3-(3-,5-di-t-butyl-4-hydroxyphenyl)propionat] und zusammen mit 0,8 phr eines Blaubatches (Masterbatch mit Blaupigment) gemischt und mittels eines Extruders bei 290°C granuliert. 400 kg dieses blauen Granulates wurden auf einer Extrusionsblasanlage zu 200 l Fässern extrudiert. Die so erhaltenen blauen Fässer wiesen an der Innen- oder Außenoberfläche einen "Schäleffekt" der Note 3, 4 oder 5 auf.

## Patentansprüche

1. Verfahren zur Verminderung des Schälens bei der Extrusion einer Polyolefin-Formmasse, dadurch gekennzeichnet, daß man der Formmasse bestehend aus einem Olefinpolymeren 0,001 bis 5 phr eines oxidierten Wachses zusetzt.

2. Verfahren nach Anspruch 1, dadurch gekennzeichnet, daß als oxidiertes Wachs ein oxidiertes Polyolefinwachs eingesetzt wird.

3. Verfahren nach Anspruch 1, dadurch gekennzeichnet daß als Polyolefin Polyethylen, Polypropylen, Polybuten-1, Polyhexen-1, Poly-4-Methylenpenten-1, Polyocten-1 oder deren Copolymer eingesetzt wird.

4. Verfahren nach Anspruch 3, dadurch gekennzeichnet, daß als Polyolefin Polyethylen eingesetzt wird.

5. Verfahren nach Anspruch 1, dadurch gekennzeichnet, daß bei der Extrusion Fässer hergestellt werden.

## Claims

1. A process for reducing peeling during extrusion of a polyolefin molding composition, which comprises adding 0.001 to 5 phr of an oxidized wax to the molding composition comprising an olefin polymer.

2. The process as claimed in claim 1, wherein the oxidized wax used is an oxidized polyolefin wax.

3. The process as claimed in claim 1, wherein the polyolefin used is polyethylene, polypropylene, polybut-1-ene, polyhex-1-ene, poly-4-methylenepent-1-ene, polyoct-1-ene or a copolymer thereof.

4. The process as claimed in claim 3, wherein the polyolefin used is polyethylene.

5. The process as claimed in claim 1, wherein drums are produced during extrusion.

## Revendications

1. Procédé pour réduire le pelage lors de l'extrusion d'une matière moulable polyoléfinique, caractérisé en ce que l'on ajoute à la matière moulable composée d'un polymère oléfinique de 0,001 à 5 phr d'une cire oxydée.

2. Procédé selon la revendication 1, caractérisé en ce que la cire oxydée utilisée est une cire polyoléfinique oxydée.

3. Procédé selon la revendication 1, caractérisé en ce que la polyoléfine utilisée est le polyéthylène, le polypropylène, le polybut-1-ène, le polyhex-1-ène, le poly-4-méthylènepent-1-ène, le polyoct-1-ène ou leurs copolymères.

4. Procédé selon la revendication 3, caractérisé en ce que la polyoléfine utilisée est le polyéthylène.

5. Procédé selon la revendication 1, caractérisé en ce que des fûts sont produits lors de l'extrusion.
